# EUROPEAN PATENT APPLICATION

(11) **EP 3 205 855 A1**
(43) Date of publication of application: **16.08.2017**
(21) Application number: 17151031.6
(22) Date of filing: 11.01.2017
(51) Int. Cl.: F02B 27/00, F02B 27/02, F02M 35/12, F02B 29/04, F02B 31/08

(54) **AN INTAKE SYSTEM**

(30) Priority: 10.02.2016 GB 201602345
(71) Applicant: Ford Global Technologies, LLC, Dearborn, MI 48126 (US)
(72) Inventor: CAPON, Geoff Charles, Chelmsford, Essex CM2 8SA (GB); FORD, Kim, Basildon, Essex SS16 6LX (GB)
(74) Representative: Dowling, Andrew

(57) **Abstract**

An intake system for an engine is provided, the system comprises: an intake duct configured to carry inlet air to cylinders of the engine; a chamber provided to one side of the intake duct and in fluid communication with the intake duct; a movable element provided within the chamber; and an actuator configured to vary the position of the movable element and thereby vary the volume of the chamber. The intake system provides improved volumetric efficiency for the engine.

## Description

### Technical Field

The present disclosure relates to an intake system for an engine, such as an internal combustion engine, and is particularly, although not exclusively, concerned with an intake system configured to improve the volumetric efficiency of the engine.

### Background

Intake systems for engines of motor vehicles are often designed with a fixed geometry, which is tuned to provide air to cylinders of the engine most effectively at a particular desirable engine running speed. The desirable engine running speed may be a speed at which the engine produces peak power or peak torque. Alternatively, the desirable engine running speed may be a speed at which the engine operates most efficiently when the vehicle is travelling long distances. Designing the geometry of the intake system such that it is tuned to a desirable engine speed may enhance the performance of the engine in this running condition.

Variable geometry inlet systems comprising variable length inlet ducts are available, which allow the tuning of the intake system to be varied during operation of the engine. However, packaging of intake systems is often tight, restricting the use of such systems.

### Statements of Invention

According to an aspect of the present disclosure, there is provided an intake system for an engine, the system comprising: an intake duct configured to carry inlet air to cylinders of the engine; a chamber provided to one side of the intake duct and in fluid communication with the intake duct; a movable element provided within the chamber; and an actuator configured to vary the position of the movable element and thereby vary the volume of the chamber.

The actuator may configured to vary the position of the movable element according to the rotational speed of the engine. Additionally or alternatively, the actuator may be configured to vary the position of the movable element at a frequency, e.g. to oscillate or reciprocate the movable element. The frequency may vary according to the rotational speed of the engine. The position of the movable element may be varied about a mean position.

The chamber may comprise a neck portion and a cavity portion, the neck portion having a smaller diameter than the cavity portion. A component of the mainstream flow velocity where the neck portion meets the intake duct may be perpendicular to a central axis of the neck portion, e.g. the central axis of the neck portion may be at an angle relative to the flow of inlet air within the intake duct where the neck portion meets the duct.

The intake system may further comprise an orifice configured to permit a flow of inlet air into and/or out of the chamber. The neck portion and the orifice may be separate or the orifice may form the neck portion.

The intake duct and/or the orifice may be configured such that a component of the mainstream flow velocity where the orifice meets the intake duct is perpendicular to a central axis of the orifice, e.g. an opening on the orifice. For example, the intake duct and/or the orifice may be configured such that the inlet air flowing within the intake duct may be directed at least partially across the orifice. The inlet air may also be directed at least partially into and/or out of the orifice, e.g. the opening of the orifice.

The engine may comprise one or more engine inlets. The engine inlets may be configured to selectively open to permit the inlet air to enter the cylinders.

The actuator may be configured to vary the position of the movable element according to the opening of the engine inlets, e.g. to vary the volume of the chamber according to the inlet which is opening, or is next to open.

The actuator may be configured to vary the frequency at which the position of the movable element varies according to the opening of the engine inlets, e.g. according to which inlet is open and/or which inlet is the next to open.

The actuator may be configured to vary a phase difference between the movement of the movable element and the rotation of the engine according to the opening of the engine inlets, e.g. according to which inlet is open and/or which inlet is the next to open.

The actuator may be configured to vary the position of the movable element and/or the frequency at which the position of the movable element is varied according to a distance between the chamber and the engine inlet that is being opened.

The chamber may be provided at a location substantially equidistant through the intake duct from a pair of the engine inlets.

The intake duct may further comprise an inlet manifold configured to carry inlet gases to each of the cylinders. The chamber may be provide at one side of the inlet manifold. The chamber may be in fluid communication with the intake manifold. The chamber may be provided substantially centrally on the inlet manifold. The inlet manifold may comprise a first end and a second end, wherein the first end is closer to an air inlet of the intake system than the second end. The chamber may be in fluid communication with the inlet manifold at or near the second end.

The intake system may further comprise a cooler configured to cool the flow of inlet air within the inlet duct. The chamber may be provided downstream of the cooler. The chamber may be provided upstream of the cooler.

The intake system may further comprise one or more additional chambers provided in fluid communication with the inlet duct. The additional chambers may comprise additional movable elements provided within the additional chambers. The additional chambers may comprise additional actuators configured to vary the positions of the additional movable elements. The additional actuators may be configured to vary the positions of the movable elements and thereby vary the volumes of the additional chambers. Any of the features described herein with reference to the chamber may apply equally to the additional chamber.

At least one of the additional chambers is provided upstream of the cooler. Additionally or alternatively, at least one of the additional chambers may be provided downstream of the cooler.

The chamber and/or actuator may be configured to adjust a frequency of pressure waves within the inlet air. Additionally or alternatively, the chamber and/or actuator may be configured to generate pressure waves within the inlet air at a desired frequency.

The chamber and/or actuator may be configured such that a frequency of pressure waves within the inlet air substantially corresponds to a desired frequency at which the pressure waves provide enhanced induction for the engine. For example, the chamber and/or actuator may be configured to adjust a frequency of existing pressure waves within the inlet air and/or to generate pressure waves at the desired frequency.

The chamber and/or actuator may be configured such that high pressure waves within the inlet air compress the inlet air within the cylinders e.g. when a corresponding engine inlet is open.

The chamber and/or actuator may be configured such that the frequency of pressure waves within the inlet air is substantially equal to the second harmonic frequency of the engine running speed, e.g. twice the engine running speed.

The chamber and/or actuator may be configured such that gases within the chamber resonate at a frequency at which the pressure waves within the intake duct provide enhanced induction for the engine.

The chamber and/or actuator may be configured to generate a pressure wave within the inlet duct at a frequency that is substantially equal to a desired frequency at which the pressure waves within the inlet duct provide enhanced induction for the engine.

A vehicle or engine comprising the intake system according to any of the preceding claims.

According to another aspect of the present disclosure, there is provided a method of providing enhanced induction for an engine, the engine comprising an intake system comprising: an intake duct configured to carry inlet air to cylinders of the engine; a chamber provided to one side of the intake duct and in fluid communication with the intake duct; a movable element provided within the chamber; and an actuator configured to vary the position of the movable element and thereby vary the volume of the chamber, wherein the method comprises: varying the position of the movable element to adjust pressure variations within the intake system, e.g. a natural frequency of the pressure variations.

The position of the movable element may be varied such that a natural frequency of pressure variations within the intake duct may be substantially equal to a frequency at which the pressure variations may provide enhanced induction for the engine.

Additionally or alternatively, the position of the movable element may be varied such that pressure variations may be generated within the intake duct at a frequency substantially equal to the frequency at which the pressure variations may provide enhanced induction for the engine.

The position of the movable element may varied such that pressure variations may be provided within the intake duct with a natural frequency substantially equal to the second harmonic frequency of the engine running speed.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a schematic diagram of an engine system for a motor vehicle, comprising an intake system according to an arrangement of the present disclosure;
Figure 2 is a schematic diagram of an engine system for a motor vehicle, comprising an intake system according to another arrangement of the present disclosure; and
Figure 3 is a schematic diagram of an engine system for a motor vehicle, comprising an intake system according to another arrangement of the present disclosure.

### Detailed Description

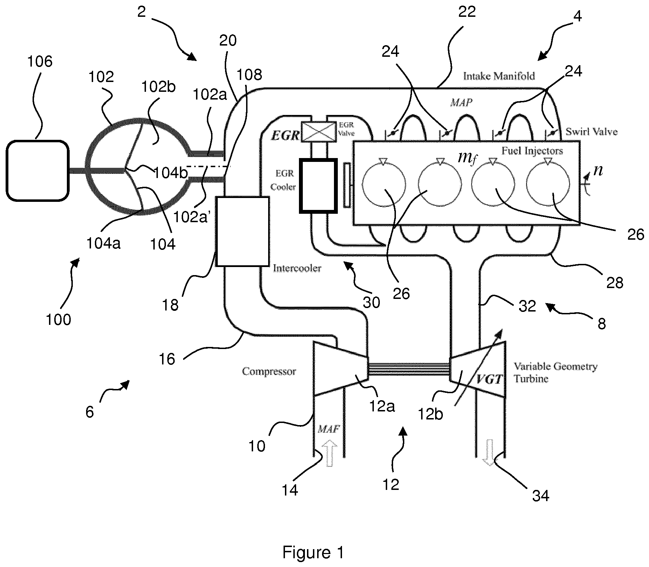

With reference to Figure 1, an engine system 2 for a vehicle, such as a motor vehicle, comprises an engine 4, an intake system 6, an exhaust system 8 and a turbocharger 12.

Inlet air enters an intake duct 10 of the intake system 6 via an air inlet 14, before being compressed by a turbocharger compressor 12a. The turbocharger compressor 12a is driven by a turbocharger turbine 12b, which is provided on the same shaft as the turbocharger compressor 12a.

When the inlet air is compressed by the turbocharger compressor 12a, the temperature of the inlet air may be increased. The compressed inlet air leaving the turbocharger compressor 12a may enter a hot inlet duct 16. Delivering inlet air to the engine at an increased temperature may reduce the efficiency of the engine and may increase the amount of polluting substances produced by the engine. The intake system may therefore comprise an inlet cooler 18 configured to cool the inlet air within the hot inlet duct 16.

Inlet air passing though the inlet cooler 18 may enter a cold inlet duct 20. The cold inlet duct 20 may be configured to deliver the inlet air to an inlet manifold 22 of the engine 4. The engine 4 may comprise one or more inlet valves 24, which are opened selectively by the engine to allow air within the inlet manifold to be drawn into one or more cylinders 26 of the engine 4. Each cylinder 26 may correspond to one of the inlet valves 24. Alternatively, two or more inlet valves may correspond with one of the cylinders 26, such that air may be drawn into the cylinder via a plurality of inlet valves.

The inlet air may be drawn into the cylinders through the action of one or more pistons (not shown) provided within the cylinders 26. Additionally, the increased pressure of the inlet air provided by the turbocharger compressor 12a may act to force inlet air into the cylinders 26.

The inlet air may be mixed with fuel within the cylinder 26, which is combusted in the presence of the inlet air to drive the piston of the cylinder. The piston in turn drives a crank shaft of the engine (not shown).

The gases produced through the combustion of the fuel and inlet air are exhausted from the engine via an exhaust manifold 28 and enter an exhaust duct 32 of the exhaust system 8.

The engine system 2 may further comprise an Exhaust Gas Recirculation (EGR) system 30. The EGR system 30 allows a portion of the exhaust gases to be recirculated back to the inlet of the engine 4. Replacing a portion of the oxygen rich air with burnt exhaust gases reduces the proportion of the contents of each cylinder that is available for combustion. This results in a lower heat release and lower peak cylinder temperature and thereby reduces the formation of NO_{X}.

As shown in Figure 1, the EGR system 30 may comprise a high pressure EGR system configured to recirculate exhaust gases prior to the gases being expanded through the turbocharger turbine 12b. However, it is also envisaged that the EGR system 30 may comprise a low pressure EGR system, in which exhaust gases are recirculated, after being expanded through the turbocharger turbine, to a location upstream of the turbocharger compressor 12a. The engine system 2 may comprise a combination of low pressure and high pressure EGR systems. Alternatively, the vehicle may not comprise an EGR system.

The exhaust gases within the exhaust duct 32 are expanded through the turbocharger turbine 12b. Energy is extracted from the exhaust gases by the turbocharger turbine 12b in order to drive the turbocharger compressor 12a. The exhaust gases are then exhaust via an exhaust outlet 34.

As mentioned above, the inlet valves 24 are opened in order to allow inlet air to enter the engine cylinders 26. When one of the inlet valve 24 is open, air within the inlet duct may flow towards the inlet manifold. The inlet air flowing towards the inlet manifold has momentum and hence, when the inlet valve 24 closes (or the engine cylinder is fully charged with inlet air), the inlet air may continue to flow towards the inlet manifold. This flow of inlet air may lead to an increase in the pressure of inlet air within the inlet manifold, creating a higher pressure region of inlet air at or towards the inlet manifold. The increased pressure at the inlet manifold 22 may act to decrease the rate of inlet air flowing from the air inlet 14 to inlet manifold 22. As the flow rate reduces, the higher pressure region of the inlet air may propagate upstream towards the air inlet 14.

Inlet air downstream of the higher pressure region may flow at a lower flow velocity (in a direction towards the inlet manifold 22) than inlet air upstream of the higher pressure region. This may lead to the higher pressure region propagating further upstream and may lead to a lower pressure region being formed downstream of the higher pressure region. The lower pressure region may in turn act to increase the flow velocity of the inlet gases downstream of the higher pressure region, which may lead to the higher pressure region propagating back downstream towards the inlet manifold 22. The higher pressure region may oscillate upstream and downstream according to a natural frequency of the intake system 6.

The natural frequency of the intake system 6 may be determined by the geometry of the hot and/or cold inlet ducts 16, 20. The natural frequencies of the hot and cold inlet ducts may differ, and hence, multiple higher pressure regions may be present within the inlet ducts 16, 20, which may oscillate at different frequencies.

When providing the intake system 6, it is often desirable to tune to natural frequencies of the hot and/or cold inlet ducts 16, 20 such that the higher pressure region is located at the inlet manifold 22 when each the inlet valves 24 are open. This may enable inlet air within the cylinders 26 of the engine 4 to be charged to a higher pressure. Charging the inlet air to a higher pressure may improve the power and/or efficiency of the engine 4.

The opening and shutting of the inlet valves 24 may also produce pressure waves within the inlet gases, which propagate upstream towards the air inlet 14. As the pressure waves propagate through the inlet air, they may cause a pressure drop in the inlet air. For example, inlet air downstream of the pressure waves may be at a lower pressure than the inlet air upstream of the pressure waves. When the pressure waves reach a location on the inlet duct where the area of the duct changes, e.g. at the inlet cooler 18 and/or the turbocharger compressor 12a, the pressure waves may be at least partially reflected. As the reflected pressure waves propagate downstream, the pressure of the inlet air may be increased as the pressure waves pass through it. When the reflected pressure waves reach the inlet manifold 22 they may be reflected once again, and the process of propagation and reflection may be repeated. If one or more of the inlet valves 24 are open when the reflected pressure waves reaches the inlet manifold, the pressure waves may enter the corresponding cylinder 26 and may increase the pressure of the inlet gases within the cylinder, e.g. charging the inlet gases, before being reflected by the bottom of the cylinder.

When providing the intake system 6, it may be desirable to configure the hot and cold inlet ducts 16, 20 such that one or more pressure waves within the inlet gases reach the inlet valves 24 of the engine whilst the inlet valves 24 are open and charge the inlet air within the corresponding cylinder 26 to a higher pressure. It may also be desirable to configure the intake system 6 and/or the inlet valves 24, such that the inlet valves close before the pressure waves are reflected and propagate back out of the cylinder.

It will be appreciated that the frequency at which the inlet valves open and close is determined according to the running speed of the engine 4. Hence, if the geometry of each of the hot and cold inlet ducts 16, 20 of the intake system is constant, the intake system may only provide enhanced induction, e.g. increased pressure of inlet air within the engine cylinders, at a particular engine running speed or range of engine running speeds.

As shown in Figures 1, 2, and 3, in order to allow the intake system 6 to provide enhanced induction over a greater range of engine running speeds, the intake system 6 may comprise a resonance system 100, 200, 300, according to arrangements of the present disclosure.

With reference to Figure 1, the resonance system 100 may comprise a chamber 102, a movable element 104 and an actuator 106. As shown in Figure 1, the chamber 102 may be provided in fluid communication with the cold inlet duct 20. However, it is equally envisaged that the chamber 102 may be in fluid communication with the hot inlet duct 16 or the inlet manifold 22. The chamber may be provided next to, e.g. to one side of, the cold inlet duct 20.

The movable element 104 may be provided within the chamber 102. The movable element 104 may be configured to move between a first position and a second position. The movable element may be substantially impermeable to air, and hence, when the movable element is moved from the first position to the second position, the volume of the chamber 102 able to receive inlet air from the intake system 6, e.g. from the cold inlet duct 20, may be varied. The volume of the chamber 102 able to receive inlet air from the intake may be referred to as an operative volume of the chamber. The operative volume may be provided to one side of the moveable element.

The movable element 104 may be deformable. The movable element may be moved between the first position and the second position by deforming at least a portion of the movable element. For example, as shown in Figure 1, an edge 104a of the movable element may be coupled to a wall of the chamber 102 and a central portion 104b of the movable element, e.g. a portion away from the edge, may be deformed in order to move the movable element between the first and second positions. The movable element 104 may be sealed against the wall of the chamber 102 at the edge 104a of the movable element to prevent inlet air passing the movable element 104.

The actuator 106 may be coupled to the movable element 104, e.g. the central portion 104b of the movable element, and may be configured to move the movable element between the first and second positions. The actuator 106 and/or the movable element 104 may be configured such that the movable element 104 may be positioned at any point between the first and second positions, e.g. the position of the movable element 106 may be continuously variable between the first and second positons. Alternatively, movement of the actuator 106 and/or the movable element 104 may be stepped such that the movable element 104 may be positioned in one or more discrete locations between the first and second positions. Alternatively again, the actuator 106 and/or movable element 104 may be configured such that the movable element may only be positioned at either the first or second position.

The actuator 106 may be an electrical actuator. Alternatively, the actuator 106 may be a hydraulic or pneumatic actuator. Alternatively again, the actuator 106 may be any other form of actuator.

In the arrangement shown in Figure 1, the chamber 102 comprises a neck portion 102a and a cavity portion 102b. As depicted, the cavity portion 102a may be substantially spherical. Alternatively, the cavity portion 102a may be any other shape. Such as cylindrical or conical, e.g. a conical frustum. The neck portion 102a may extend between the cavity portion 102b and the cold inlet duct 20, e.g. in a longitudinal direction of the neck portion 102a. The neck portion may be substantially circular in cross-section. Alternatively, the cross-section of the neck portion may be oval, rectangular, or any other shape. A central axis 102a' of the neck portion may extend along the length of the neck portion 102a, e.g. between the cavity portion 102a and the cold inlet duct 20, through a substantially central location of the cross-section of the neck portion 102a.

The cross-section of the neck portion may be substantially constant along the length of the neck portion 102a. Alternatively, the cross-section of the neck portion 102a may vary along the length of the neck portion, e.g. a cross-sectional area of the neck portion may increase or decrease along its length. The cross-sectional area, e.g. the maximum cross-sectional area of the neck portion 102a, may be smaller than a maximum cross-sectional area of the cavity portion 102b. For example, the diameter of the circular cross-section of the neck portion depicted in Figure 1 may be less than the diameter of the sphere defining the cavity portion 102b.

The chamber 102 may be coupled to and in fluid communication with the cold inlet duct 20 via the neck portion 102a. The chamber 102 may be arranged such that the central axis of the neck portion 102a is at an angle to the cold inlet duct 20, e.g. relative to the flow of inlet air within the cold inlet duct 20. In other words, the neck portion 102a and/or the cold inlet duct 20, may be configured such that a component of the mainstream flow velocity within the cold inlet duct, at the location where the neck portion 102a meets the cold inlet duct 20, is perpendicular to the central axis of the neck portion 102a. For example, as shown in Figure 1, the central axis of the neck portion may be arranged perpendicularly to the cold inlet duct 20.

An orifice 108 may be defined between the cold inlet duct 20 and the neck portion 102a, which controls, e.g. regulates, the flow of inlet air between the cold inlet duct 20 and the neck portion 102a. The diameter of the orifice may be smaller than the diameter of the neck portion 102a. The orifice, e.g. the opening of the orifice, may be parallel to the central axis of the neck portion 102a, e.g. a central axis of the orifice 108 may be parallel to, e.g. coincident with, the central axis of the neck portion 102a. Hence, the opening of the orifice may be arranged such that a component of the mainstream flow velocity within the cold inlet duct, at the location of the orifice, is perpendicular to the central axis of the neck portion 102a. In other words, the central axis of the orifice 108 may be arranged at an angle relative to the flow of inlet air within the cold inlet duct 20, such that the inlet air flows at least partially across the orifice 108.

The flow of inlet air and/or pressure variations within the cold inlet duct 20, e.g. such as those caused by the flow of inlet air into the engine cylinders 26, and/or the opening and/or closing of the inlet valves 24, may cause inlet air to flow into and out of the chamber 102. Similar to the intake system 6, the chamber 102 may have a resonant frequency. Pressure and/or flow variations within the cold inlet duct 20 may lead to pressure resonances within the chamber 102 at the resonant frequency of the chamber 102. Air resonating within the chamber 102 may lead to pressure variations being induced within the cold inlet duct, which may alter or override the existing pressure variations present in the cold inlet duct 20.

The resonant frequency of the chamber 102 may be affected by the operative volume of the chamber 102, e.g. the volume of the cavity portion 102b to one side of the movable element, and hence, by moving the movable element 104 between the first and second positions, the resonant frequency of the chamber 102 may be adjusted. Adjusting the resonant frequency of the chamber 102 may affect the overall resonant frequency of the intake system 6. The movable element 104 may be adjusted to set the resonant frequency of the intake system 6 in order to provide enhanced induction for the engine 4 through the mechanisms described above. For example, the resonant frequency of the intake system 6 may be adjusted such that the higher pressure region of the inlet air may be located at the inlet manifold when the inlet valves 24 are open at substantially all engine running speeds.

Additionally or alternatively, resonating air within the chamber 102 may produce pressure waves and/or may alter the frequency of pressure waves within the inlet air, which are caused by the opening and/or closing of the inlet valves 24. The movable element 104 may be configured such that the resonating air within the chamber 102 causes pressure waves within the inlet air to reach the inlet valves 24 whilst the inlet valves 24 are open, thereby increasing the pressure of inlet air within the engine cylinders 26 and providing enhanced induction.

As shown in Figure 1, the engine may comprise four cylinder 26, hence it may be desirable to adjust the natural frequency of the intake system to be substantially equal to the second harmonic frequency of the engine, e.g. twice the running speed of the engine. The desirable natural frequency of the intake system may depend of the configuration of the engine 4 and/or the inlet valves 24.

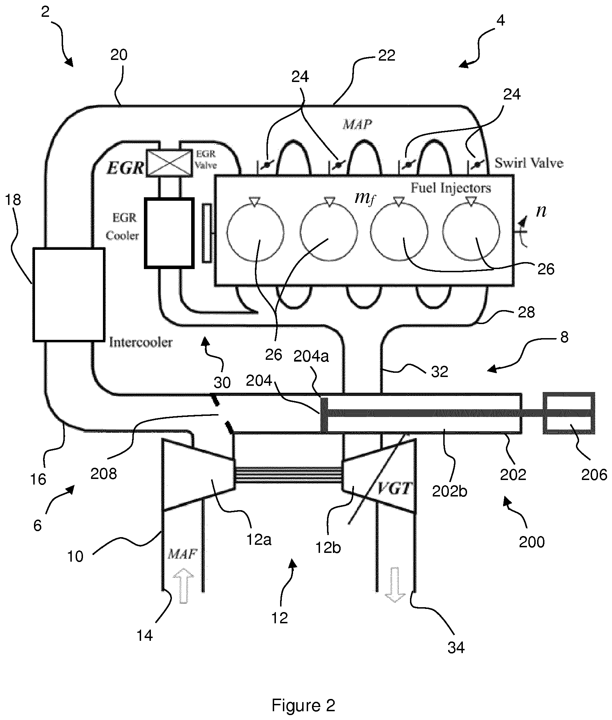

With reference to Figure 2, a chamber 202 of a resonance system 200 according to another arrangement of the present disclosure may be provided in fluid communication with the hot inlet duct 16. As shown in Figure 2, the chamber 202 may not comprise a neck portion. However, an orifice 208 may optionally be provided, which controls and/or regulates the flow of inlet air into and/or out of the chamber 202. In the arrangement shown in Figure 2, the orifice may form the neck portion. A cavity portion 202b of the chamber 202 may be substantially cylindrical. As shown in Figure 2, the central axis of the chamber 202 may be in line with a portion of the cold inlet duct 16. A central axis of the orifice 208 may be provided at an angle relative to a central axis of the chamber 202, e.g. a central axis of the cylindrical cavity 202b. As described above with reference to Figure 1, the opening of the orifice 208 may be provided at an angle relative to the flow of inlet air within the inlet duct, such that the inlet air flows at least partially across the orifice 208, e.g. a component of the velocity of the mainstream inlet air at the location of the orifice may be perpendicular to the central axis of the orifice.

A movable element 204 may be provided within the chamber 202. The movable element may be a substantially circular disc. The movable element 204 may be rigid. An edge portion 204a of the movable element may be configured to sealingly engage the wall, such that inlet air is prevented from passing between the movable element and the wall of the chamber 202. The movable element 204 may be configured to move parallel to a central axis of the cylindrical cavity 202b to vary the operative volume of the chamber 202, e.g. the movable element may form a piston provided within the cylindrical cavity 202b of the chamber.

The resonance system 200 further comprises an actuator 206 configured to move the movable element 204 between a first position at which the operative volume of the chamber 202 is at a maximum value, to a second position at which the operative volume of the chamber 202 is at a minimum value.

The resonance system 200 may be configured to perform similarly to the resonance system 100 to alter and/or generate pressure variations within the hot inlet duct to provide enhanced induction for the engine.

Although the resonance system 100, shown in Figure 1, is provided on the cold inlet duct 20, and the resonance system 200 is provided on the hot inlet duct 16, it is equally envisage that the resonance system 100 may be provided on the hot inlet duct 16 and/or the resonance system 200 may be provided on the cold inlet duct 20 in addition or as an alternative to the resonance systems 100, 200 depicted in Figures 1 and 2. More than one resonance system 100, 200 may be provided on the hot inlet duct 16 and/or the cold inlet duct 20.

As described above, the movable elements 104, 204 of the resonance systems 100, 200 may be configured to adjust the operative volumes of the chambers 102, 202 of the resonance systems to alter the resonant frequencies of the resonance systems. The resonance systems 100, 200 make use of the resonance of inlet air within the chambers 102, 202 to affect the natural frequency of the intake system 6 and/or to provide pressure variations, e.g. pressure waves, within the inlet air at a desired frequency. The position of the movable element 104, 204 may therefore be varied when the rotational speed of the engine varies, altering the natural frequency of the intake system 6 and continuing to provide enhanced induction to the engine 4. However, when the speed of the engine is constant, the movable elements 104, 204 may not be required to move and enhanced induction may be provided passively by the resonance systems 100, 200. The resonance systems 100 may therefore be passive resonance systems.

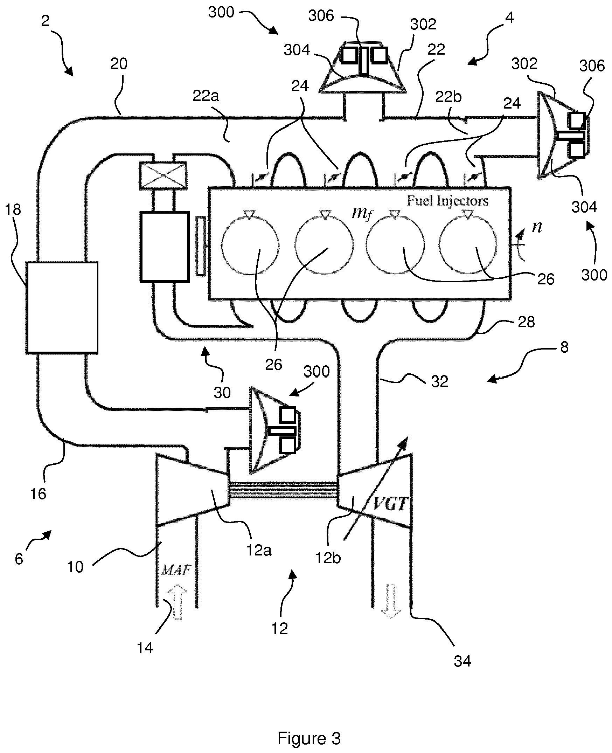

In an alternative arrangement of the present disclosure, depicted in Figure 3, a resonance system 300 according to another arrangement of the present disclosure may be configured to implement forced vibration of the inlet air in order to provide enhanced induction for the engine 4.

As shown in Figure 3, the resonance system 300 comprises a chamber 302, a movable element 304 and an actuator 306. The chamber 302 may comprise a cavity 302a, which may be shaped as a conical frustum.

The actuator 306 may be configured to move, e.g. oscillate, reciprocate or vibrate, the movable element 304 at a desired frequency in order to produce pressure variations in the inlet air within the cavity 302. The desired frequency may be determined in order to cause pressure waves within the hot and/or cold inlet duct 16, 20, which provide enhanced induction for the engine 4.

As described above, the desired frequency may vary according to the engine running frequency. Hence, the frequency at which the actuator 306 moves the movable element 304 may vary according to the engine running speed. Unlike the resonance systems 100, 200 described above, the position of the movable element 304 of the resonance system 300 may be varied by the actuator 306 even when the engine running speed is constant, e.g. in order to generate pressure variations. In other words, the resonance system 300 may be an active resonance system.

As depicted in Figure 3, the chamber 302 may be provided on the inlet manifold 22, e.g. in fluid communication with the inlet manifold. The inlet manifold 22 may have a first end 22a and a second end 22b. The first end 22a may be closer to the engine inlet 14 (through the cold and hot inlet ducts 20, 16). The chamber 302 may be provided between the first and second ends 22a, 22b of the inlet manifold, e.g. substantially centrally between the first and second ends 22a, 22b. Alternatively, the chamber 302 may be provided at or towards an end of the inlet manifold. For example, as shown in Figure 3, the chamber may be provided at the second end 22b.

A plurality of resonance systems 300 may be provided within the intake system 6. For example, as shown in Figure 3, one resonance system may be provided on the hot inlet duct 16 and two resonance system 300 may be provided on the inlet manifold 22. Alternatively, two or more resonance systems 300 may be provided on the hot inlet duct 16 and/or one or more than two resonance systems 300 may be provided on the inlet manifold 22. In another arrangement (not shown) one, two or more than two resonance systems 300 may be provided on the cold inlet duct 20.

The chamber 302, of one or more of the resonance systems 300, may be provided at a location, such as location A, which is between, e.g. equidistant from, a pair of the inlet valves 24 through the inlet manifold. Alternatively, the chamber 302 may be provided at a location B, which is a different distance from each of the inlet valves 24. When the chamber 302 is provided a different distance from each of the inlet valves 24, the desirable frequency of pressure waves produced by the resonance system 300 in order to provide enhanced induction for the engine may vary according to which of the inlet valves is open. Hence, the actuator 306 may be configured to vary the frequency at which the movable element is moved according to the opening of the inlet valves 24, e.g. according to which inlet valve is open, is next to open, and/or will be open when the pressure wave being generated within the chamber 302 reach the inlet valves 24. Additionally or alternatively, it may be desirable to adjust the phase of the vibrations of the movable element 304 relative to the rotation of the engine according to the opening of the inlet valves 24, e.g. according to which inlet valve is open, will be the next to open, and/or will be open when the pressure waves being generated within the chamber 302 reach the inlet valves 24.

A method for providing enhanced induction for an engine, the engine comprising an intake system 6 according to the present disclosure, may comprise varying the position of the movable element 104, 204, 304 in order to adjust a frequency of pressure variations within the intake system to provide enhanced induction to the engine.

As described above, the intake system may comprise a passive resonance system, and the position of the movable element may be determined according to the engine running speed. The natural frequency of pressure variations within the resonance system may affect the natural frequency of pressure variations within the intake systems 6. Hence, the position of the movable element may be determined such that the natural frequency of pressure variations within the intake duct are substantially equal to a frequency at which the pressure variations provide enhanced induction for the engine.

Additionally or alternatively, the position of the movable element may be varied such that pressure variations may be generated within the intake duct at a frequency substantially equal to the frequency at which the pressure variations provide enhanced induction for the engine. For example, for an engine comprising four cylinders, the frequency may be twice the engine running speed, e.g. the second harmonic of the engine running speed. As described above, such pressure variations may be generated using an active or passive resonance system.

If the resonance system comprises an active resonance system, the method may comprise determining a frequency at which to vary the position of the movable element, according to the running speed of the engine.

A vehicle comprising the intake system 6 may further comprise a controller (not shown). The controller may comprise one or more modules configured to perform the method for providing enhanced induction described above. The controller may be operatively coupled to the actuator 106, 206, 306 and may be configured to control, e.g. vary, the position of the movable element 104, 204, 304 via the actuator.

This application claims priority from United Kingdom patent application number 1602345.9. To retain the subject matter of the priory founding application within the present application, the original claims of GB1602345.9 are included within this specification as numbered statements, which are set out below:
Statement 1. An intake system for an engine, the system comprising:
   an intake duct configured to carry inlet air to cylinders of the engine;
   a chamber provided to one side of the intake duct and in fluid communication with the intake duct;
   a movable element provided within the chamber; and
   an actuator configured to vary the position of the movable element and thereby vary the volume of the chamber.
Statement 2. The intake system of statement 1, wherein the actuator is configured to vary the position of the movable element according to the rotational speed of the engine.
Statement 3. The intake systems of statement 1 or 2, wherein the actuator is configured to vary the position of the movable element at a frequency, wherein the frequency varies according to the rotational speed of the engine.
Statement 4. The intake system of any of the preceding statements, wherein the chamber comprises a neck portion and a cavity portion, the neck portion having a smaller diameter than the cavity portion, wherein a component of the mainstream flow velocity where the neck portion meets the intake duct is perpendicular to a central axis of the neck portion.
Statement 5. The intake system of any of the preceding statements further comprising an orifice configured to permit a flow of inlet air into and/or out of the chamber.
Statement 6. The intake system of statement 5, wherein the intake duct and/or the orifice is configured such that a component of the mainstream flow velocity where the orifice meets the intake duct is perpendicular to a central axis of the orifice.
Statement 7. The intake system of any of the preceding statements, wherein the engine comprises one or more engine inlets, wherein the engine inlets are configured selectively to open to permit the inlet air to enter the cylinders.
Statement 8. The intake system of statement 7, wherein the actuator is configured to vary the position of the movable element according to the opening of the engine inlets.
Statement 9. The intake system of statement 7 or 8, wherein the actuator is configured to vary the frequency at which the position of the movable element varies according to the opening of the engine inlets.
Statement 10. The intake system of any of statements 7 to 9, wherein the actuator is configured to vary a phase difference between the movement of the movable element relative to the rotation of the engine according to the opening of the engine inlets.
Statement 11. The intake system of any of statements 7 to 9, wherein the actuator is configured to vary the position of the movable element and/or the frequency at which the position of the movable element is varied according to a distance between the chamber and the engine inlet that is being opened.
Statement 12. The intake system of any of statements 7 to 11, wherein the chamber is provided at a location substantially equidistant through the intake duct from a pair of the engine inlets.
Statement 13. The intake system of any of statements 7 to 12, wherein the intake duct further comprises an inlet manifold configured to carry inlet gases to each of the cylinders, wherein the chamber is in fluid communication with the intake manifold.
Statement 14. The intake system of statement 13, wherein the chamber is provided substantially centrally on the inlet manifold.
Statement 15. The intake system of statement 13, wherein the inlet manifold comprises a first end and a second end, wherein the first end is closer to an air inlet of the intake system than the second end, wherein the chamber is in fluid communication with the inlet manifold at or near the second end.
Statement 16. The intake system of any of the preceding statements, wherein the system further comprises a cooler configured to cool the flow of inlet air within the inlet duct.
Statement 17. The intake system of statement 16, wherein the chamber is provided downstream of the cooler.
Statement 18. The intake system of statement 16, wherein the chamber is provided upstream of the cooler.
Statement 19. The intake system of any of statements 16 to 18, wherein the system further comprises:
   one or more additional chambers provided in fluid communication with the inlet duct;
   wherein the additional chambers comprise additional movable elements provided within the additional chambers and additional actuators configured to vary the positions of the additional movable elements;
   wherein the additional actuators are configured to vary the positions of the movable elements and thereby vary the volumes of the additional chambers.
Statement 20. The intake system of statement 19, wherein at least one of the additional chambers is provided upstream of the cooler.
Statement 21. The intake system of statement 19 or 20, wherein at least one of the additional chambers is provided downstream of the cooler.
Statement 22. The intake system of any of the preceding statements, wherein the chamber and/or actuator is configured to adjust a frequency of pressure variations within the inlet air.
Statement 23. The intake system of any of the preceding statements, wherein the chamber and/or actuator is configured such that a frequency of pressure variations within the inlet air substantially corresponds to a frequency at which the pressure variations provide enhanced induction for the engine.
Statement 24. The intake system of statement 22 or 23, wherein the chamber and/or actuator is configured such that high pressure variations within the inlet air compress the inlet air within the cylinders.
Statement 25. The intake system of any of statements 22 to 24, wherein the chamber and/or actuator is configured such that the frequency of pressure variations within the inlet air is substantially equal to the second harmonic frequency of the engine running speed.
Statement 26. The intake system of any of the preceding statements, wherein the chamber and/or actuator is configured such that gases within the chamber resonate at a frequency at which the pressure waves within the intake duct provide enhanced induction for the engine.
Statement 27. A vehicle or engine comprising the intake system according to any of the preceding statements.
Statement 28. A method of providing enhanced induction for an engine, the engine comprising an intake system comprising:
   an intake duct configured to carry inlet air to cylinders of the engine;
   a chamber provided to one side of the intake duct and in fluid communication with the intake duct;
   a movable element provided within the chamber; and
   an actuator configured to vary the position of the movable element and thereby vary the volume of the chamber,
   wherein the method comprises:
      varying the position of the movable element to adjust pressure variations within the intake system.
Statement 29. The method of statement 28, wherein the position of the movable element is varied such that a natural frequency of pressure variations within the intake duct is substantially equal to a frequency at which the pressure variations provide enhanced induction for the engine.
Statement 30. The method of statement 28, wherein the position of the movable element is varied such that pressure variations are generated within the intake duct at a frequency substantially equal to a frequency at which the pressure variations provide enhanced induction for the engine.
Statement 31. The method of any of statements 28 to 30, wherein the position of the movable element is varied such that pressure variations are provided within the intake duct with a natural frequency substantially equal to the second harmonic frequency of the engine running speed.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. An intake system for an engine, the system comprising:
an intake duct configured to carry inlet air to cylinders of the engine;
a chamber provided to one side of the intake duct and in fluid communication with the intake duct;
a movable element provided within the chamber; and
an actuator configured to vary the position of the movable element and thereby vary the volume of the chamber able to receive inlet air from the intake system.

2. The intake systems of claim 1, wherein the actuator is configured to vary the position of the movable element at a frequency, wherein the frequency varies according to the rotational speed of the engine.

3. The intake system of claim 1 or 2, wherein the engine comprises one or more engine inlets, wherein the engine inlets are configured selectively to open to permit the inlet air to enter the cylinders, wherein the actuator is configured to vary the position of the movable element according to the opening of the engine inlets.

4. The intake system of claim 3, wherein the actuator is configured to vary the frequency at which the position of the movable element varies according to the opening of the engine inlets.

5. The intake system of claim 3 or 4, wherein the actuator is configured to vary a phase difference between the movement of the movable element relative to the rotation of the engine according to the opening of the engine inlets.

6. The intake system of any of claims 3 to 5, wherein the actuator is configured to vary the position of the movable element and/or the frequency at which the position of the movable element is varied according to a distance between the chamber and the engine inlet that is being opened.

7. The intake system of any of claims 3 to 6, wherein the intake duct further comprises an inlet manifold configured to carry inlet gases to each of the cylinders, wherein the chamber is in fluid communication with the intake manifold, wherein the inlet manifold comprises a first end and a second end, wherein the first end is closer to an air inlet of the intake system than the second end, and wherein the chamber is provided substantially centrally on the inlet manifold or in fluid communication with the inlet manifold at or near the second end.

8. The intake system of any of the preceding claims, wherein the system further comprises a cooler configured to cool the flow of inlet air within the inlet duct, wherein the chamber is provided upstream of the cooler.

9. The intake system of claim 8, wherein the system further comprises:
one or more additional chambers provided in fluid communication with the inlet duct;
wherein the additional chambers comprise additional movable elements provided within the additional chambers and additional actuators configured to vary the positions of the additional movable elements;
wherein the additional actuators are configured to vary the positions of the movable elements and thereby vary the volumes of the additional chambers.

10. The intake system of claim 9, wherein at least one of the additional chambers is provided downstream of the cooler.

11. The intake system of any of the preceding claims, wherein the chamber and/or actuator is configured such that a frequency of pressure variations within the inlet air substantially corresponds to a frequency at which the pressure variations provide enhanced induction for the engine.

12. A vehicle or engine comprising the intake system according to any of the preceding claims.

13. A method of providing enhanced induction for an engine, the engine comprising an intake system comprising:
an intake duct configured to carry inlet air to cylinders of the engine;
a chamber provided to one side of the intake duct and in fluid communication with the intake duct;
a movable element provided within the chamber; and
an actuator configured to vary the position of the movable element and thereby vary the volume of the chamber able to receive inlet air from the intake system,
wherein the method comprises:
varying the position of the movable element to adjust pressure variations within the intake system.

14. The method of claim 13, wherein the position of the movable element is varied such that a natural frequency of pressure variations within the intake duct is substantially equal to a frequency at which the pressure variations provide enhanced induction for the engine.

15. The method of claim 13, wherein the position of the movable element is varied such that pressure variations are generated within the intake duct at a frequency substantially equal to a frequency at which the pressure variations provide enhanced induction for the engine.
